Europäisches Patentamt

European Patent Office

Office européen des brevets

(11) Veröffentlichungsnummer: **0 204 869**
**A1**

(12) **EUROPÄISCHE PATENTANMELDUNG**

(21) Anmeldenummer: 85200918.2

(22) Anmeldetag: 12.06.85

(51) Int. Cl.⁴: **F 16 K 3/08**
**F 16 K 27/04**

(43) Veröffentlichungstag der Anmeldung:
**17.12.86 Patentblatt 86/51**

(84) Benannte Vertragsstaaten:
**AT BE CH DE FR GB IT LI LU NL SE**

(71) Anmelder: **KROHNE MESSTECHNIK GMBH & CO. KG**
**Ludwig-Krohne-Strasse 5**
**D-4100 Duisburg 1(DE)**

(72) Erfinder: **Bittner, Franz**
**Platanenstrasse 11**
**D-4130 Moers(DE)**

(72) Erfinder: **Rademacher-Dubbick, Kristian**
**Waldsteige 14**
**D-4100 Duisburg 1(DE)**

(72) Erfinder: **Rotthaus, Dirk, Dr.-Ing.**
**In der Uhlenflucht 3**
**D-4630 Bochum(DE)**

(72) Erfinder: **Stevens, Udo**
**Reinhardstrasse 6**
**D-4130 Moers 1(DE)**

(74) Vertreter: **Ackmann, Günther, Dr.-Ing.**
**Claubergstrasse 24 Postfach 10 09 22**
**D-4100 Duisburg 1(DE)**

(54) Keramisches Absperr- und Regelorgan.

(57) Ein keramisches Absperr- und Regelorgan für heiße und aggressive Medien besteht aus einem in einem Gehäuse (2) angeordneten zylinderförmigen Keramikkörper (1), dessen axiale Durchflußbohrung (3) eine Zwischenwand (6) aufweist. Am Außenmantel (4) des Keramikkörpers (1) ist eine plangeschliffene, geläppte und bearfsweise polierte Gleitfläche (5) für einen von einer Anpreßfeder (18) beaufschlagten Drehschieber (8) aus keramischem Werkstoff vorgesehen, dessen gegen die Gleitfläche (5) anliegende, ebenfalls plangeschliffene, geläppte und bedarfsweise polierte Stirnfläche (29) wenigsten einen Verbindungskanal (9) aufweist, der über zwei im Keramikkörper (1) neben der Zwischenwand (6) angeordnete, von der Gleitfläche (5) bis zur Durchflußbohrung (3) führenden Querkanälen (7) angeordnet ist.

Zur Bildung eines optimalen Durchflusses in der Offenstellung ist im Keramikkörper (1) auf jeder Seite der Zwischenwand (6) ein im Querschnitt halbkreisförmiger, dem Durchmesser der Durchflußbohrung (3) entsprechender Querkanal (7) angeordnet, und der Drehschieber (8) ist mit zwei entsprechenden, im Querschnitt halbkreisförmigen Verbindungskanälen (9) und einem zwischensteg (10) versehen.

Für eine ergänzende Abdichtung ist am Außenrand der Gleitfläche (5) ein von einer Druckhülse (23) beaufschlagter Dichtungsring (24) angeordnet. Die Drehwelle (13) wird von Tellerfedern (18) beaufschlagt, die unter Zwischenlage eines Kugellagers (19) zwischen einem im Gehäuse (2) verschraubbaren Druckstück (20) und einer Schulter (17) der Drehwelle (13) verspannbar sind.

Fig. 1

## Keramisches Absperr- und Regelorgan

Die Erfindung betrifft ein keramisches Absperr- und
Regelorgan, bestehend aus einem in einen Gehäuse angeordneten zylinderförmigen Keramikkörper, dessen axiale
Durchflußbohrung eine Zwischenwand aufweist und an dessen
Außenmantel eine plangeschliffene, polierte Gleitfläche
für einen von einer Anpreßfeder beaufschlagten Drehschieber
aus keramischem Werkstoff vorgesehen ist, dessen gegen
die Gleitfläche anliegende, plangeschliffene, geläppte
und bedarfsweise polierte Stirnfläche wenigstens einen
Verbindungskanal aufweist, der über zwei im Keramikkörper
neben der Zwischenwand angeordnete, von der Gleitfläche
bis zur Durchflußbohrung führenden Querkanäle angeordnet
ist.

Für drehschieberartige Absperr- und Regelorgane ist beispielsweise aus dem DE-GM 77 26 941 bekannt, die Verschleißteile aus einem keramischen Werkstoff herzustellen,
während das Gehäuse aus metallischem Werkstoff besteht.
Der keramische Drehschieber ist für Regelzwecke mit
einem sichelförmigen Schlitz versehen. Diese Ausführung
hat jedoch den Nachteil, daß die beiden keramischen Bauteile im Gehäuse bzw. am Drehteil mit Dichtungsringen, abdichtenden Formteilen aus Kunststoff o. dgl. befestigt werden müssen, welche dem strömenden Medium ausgesetzt sind. Daher sind Absperr- und Regelorgane dieser Art für aggressive und heiße Flüssigkeiten und Gase nicht geeignet. Andererseits ist aus der US-PS 3 662 986 ein Flachschieber für Metallschmelzen bekannt geworden, bei dem die mit der heißen Metallschmelze in Berührung kommenden Bauteile des Absperrorgans aus keramischem Werkstoff bestehen. Auf ein drehschieberartiges Absperr- und Regelorgan ist eine solche Maßnahme jedoch nicht ohne weiteres übertragbar. Weiterhin ist aus der FR-PS 502 046 ein drehschieberartiges Absperrorgan bekannt, das aus Metall und einer mit Durchflußbohrungen versehenen Dichtungsscheibe aus Kunststoff o. dgl. besteht, wobei das rohrförmige Metallgehäuse einen seitlichen Ausschnitt für ein Drehorgan und eine Zwischenwand in der Durchflußbohrung aufweist. Auch diese Ausführung ist für aggressive und heiße Medien nicht geeignet.

Andererseits ist zur Eignung für heiße und aggressive Medien mit der älteren Patentanmeldung PCT/EP 85 00 118 ein keramisches Absperr- und Regelorgan vorgeschlagen worden, welches die im Oberbegriff des Anspruchs 1 angegebenen Merkmale aufweist, welches jedoch in der Durchflußstellung einen starken Druckabfall verursacht und nur für kleinere Durchflußmengen geeignet ist.

Demgegenüber liegt der Erfindung die Aufgabe zugrunde, ein keramisches Absperr- und Regelorgan der gattungsgemäßen Art derart zu verbessern, daß in der völlig offenen Durchflußstellung der Druckabfall erheblich verringert wird.

Diese Aufgabe wird erfindungsgemäß dadurch gelöst, daß im Keramikkörper auf jeder Seite der Zwischenwand ein im Querschnitt halbkreisförmiger, mindestens dem Durchmesser der Durchflußbohrung entsprechender Querkanal angeordnet

- 3 -                              0204869

und der Drehschieber mit zwei entsprechenden, im Querschnitt halbkreisförmigen Verbindungskanälen und einem
Zwischensteg versehen ist.

Durch diese Ausbildung der beiden keramischen Bauteile des
Absperr- und Regelorgans ist ein erheblich vergrößerter
Durchflußquerschnitt geschaffen, der zumindest knapp dem
halben Querschnitt der Durchflußbohrung entspricht. Bei
ausreichender Dicke des Keramikkörpermantels kann der
Durchmesser der Querkanäle für eine weitere Vergrößerung
des Durchflußquerschnitts größer als der Durchmesser
der Durchflußbohrung sein, wobei die im Querschnitt
halbkreisförmigen Querkanäle die Durchflußbohrungen
an ihren Enden gewissermaßen erweitern. Die plangeschliffene, geläppte und bedarfsweise polierte Gleitfläche des
Keramikkörpers und die ebenfalls plangeschliffene, geläppte
und bedarfsweise polierte Stirnfläche des keramischen
Drehschiebers bilden gegenüber dem heißen und/oder aggressiven Medium eine günstige Abdichtung, die auch durch
Adhäsisonswirkung unterstützt wird.

Um bei dieser Abdichtung auch den Durchtritt kleinster
Mengen infolge Grenzflächendiffusion zu verhindern, ist
vorzugsweise am Außenrand der Gleitfläche ein von einer
Druckhülse beaufschlagter Dichtungsring angeordnet.
Durch diese Ausbildung kann das eventuell hindurch
diffendierende Medium nur mit den beiden keramischen
Bauteilen und dem Dichtungsprung in Berührung kommen. Um
diesen besonders dicht gegen den Außenrand der Gleitfläche
zu pressen, kann die Druckhülse mit einer Fase versehen
sein. Zur Anstellung ist die Druckhülse vorzugsweise
von einer mit einem Außengewinde im Gehäuse verschraubbaren Spannhülse beaufschlagt.

Für einen geeigneten Drehantrieb ist der Drehschieber
mit einem über dem Zwischensteg verlaufenden Schlitz
versehen, in den ein von einer Drehwelle beaufschlagtes
Kupplungsglied eingreift. Dabei ist zweckmäßig das Kupplungsglied mit einem in den Schlitz des Drehschiebers eingreifenden Steg und die Drehwelle mit Mitnehmernasen versehen, welche in entsprechende Ausnehmung des Kupplungsgliedes eingreifen.

Ein besonders günstiger Anpreßdruck für eine hohe Abdichtung an der Gleitfläche läßt sich dadurch erzielen, daß die Drehwelle von Tellerfedern beaufschlagt wird, die eine günstige Federkonstante aufweisen. Diese sind bevorzugt unter Zwischenlage eines Kugellagers zwischen einem mit einem Außengewinde im Gehäuse verschraubbaren Druckstück für die Drehwelle und einer Schulter der Drehwelle verspannbar. Der Anpreßdruck läßt sich besonders günstig dadurch übertragen, daß das Kupplungsglied mit einem zentrischen Vorsprung versehen ist, gegen den ein kalottenförmiges Kopfstück der Drehwelle anliegt.

Der Gegenstand der Erfindung ist in der Zeichnung anhand eines Ausführungsbeispiels dargestellt; es zeigen:

Fig. 1		ein als Drehschieber ausgebildetes Absperr- und Regelorgan in einem Längsschnitt in der Sperrstellung,

Fig. 2		den dem Drehschieber nach Fig. 1 zugeordneten zylinderförmigen Keramikkörper in einer Draufsicht,

Fig. 3		die keramischen Bauteile des Drehschiebers in einem Längsschnitt entsprechend Fig. 1, jedoch in der Durchflußstellung,

Fig. 4		den keramische Drehschieber in einer Stirnansicht und

Fig. 5		einen Ausschnitt der Fig. 1 im Bereich der Gleit- und Dichtungsfläche des Drehschiebers.

Das dargestellte Absperr- und Regelorgan besteht im wesentlichen aus einem zylinderförmigen Keramikkörper 1, einen rohrförmigen Gehäuse 2 und einem als Drehschieber 8 ausgebildeten Verschlußteil. Das rohrförmige Gehäuse 2 ist aus metallischem Werkstoff oder Kunststoff gefertigt. Der Drehschieber 8 besteht ebenso wie der zylinderförmige Keramikkörper 1 aus einen hochfesten, dichtgebrannten keramischen Werkstoff, beispielsweise Oxidkeramik, der gegen aggressive Medien, wie Säuren, Laugen o. dgl. widerstandsfähig und bearbeitbar ist. Der zylinderförmige Keramikkörper 1 ist mit einer axialen Durchflußbohrung 3 für das Medium versehen.

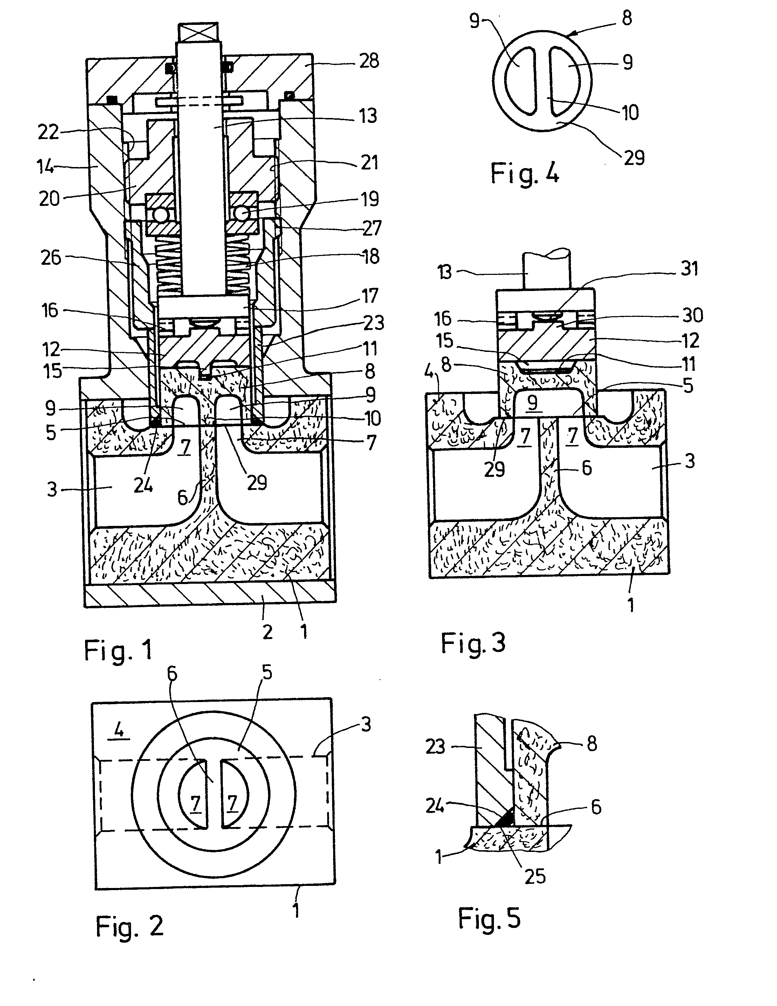

Im mittleren Bereich der axialen Durchflußbohrung 3 ist eine Zwischenwand belassen, indem zwei Sackbohrungen eingearbeitet sind. Weiterhin ist der Keramikkörper 1 an seinem Außenmantel 4 mit einer Anschliff-Fläche versehen, welche eine Gleitfläche 5 für das Verschlußteil 8 bildet (vgl. Fig. 2). Von den inneren Enden der beiden Sackbohrungen führen zwei Querkanäle 9 radial nach außen zur Gleitfläche 5. Diese beiden Querkanäle 9 haben einen halbkreisförmigen Querschnitt, der dem Durchmesser der axialen Durchflußbohrung 3 entspricht, wobei der Durchmesser jeweils von einer Seite der Zwischenwand 6 gebildet wird. Der als Verschlußteil gegen die Gleitfläche 5 anliegende keramische Drehschieber 8 ist mit zwei entsprechenden, im Querschnitt halbkreisförmigen Verbindungskanäle 9 und einem Zwischensteg 10 (vgl. Fig. 4) versehen. Die derart profilierte Stirnfläche 29 des Drehschiebers 8 ist ebenso wie die Gleitfläche des Keramikkörpers 1 plangeschliffen, geläppt und bedarfsweise poliert, so daß diese beiden Bauteile, unterstützt durch die Adhäsionkraft, eine bestmögliche Abdichtung bewirken. Durch den auf den Durchmesser der axialen Durchflußbohrung 3 abgestellten halbkreisförmigen Querschnitt der Querkanäle 7 und Verbindungskanäle 9 wird in der Fig. 3 gezeigten Offenstellung ein für einen Drehschieber optimaler Durchfluß erzielt. In dieser Offenstellung ist der Zwischensteg 10 des Drehschiebers 8 gegen der Zwischenwand 6 des Keramikkörpers 1 um 90⁰ verdreht. In der Schließstellung hingegen liegt der Zwischensteg 10 fluchtend über der Zwischenwand 6 und abdichtend gegen diese an (vgl. Fig.1). Durch Einstellungen zwischen Offen- und Schließstellung läßt sich die Durchflußmenge variieren.

Zur Drehung ist der Drehschieber 8 mit einem Schlitz 11 versehen, in welchen der Steg 15 eines Kupplungsgliedes 12 eingreift. Das Kupplungsglied 12 liegt mit einer ringförmigen Schulter auf dem Drehschieber 8 auf und wird von einer Drehwelle 13 beaufschlagt, die in einem an das rohrförmige Gehäuse 2 angeformten Rohrstutzen 14 angeordnet ist. Zur Übertragung der Drehbewegung der Drehwelle 13 auf das Kupplungsglied 12 sind am unteren Ende der Drehwelle 13 Mitnehmernasen 16 angeordnet, die in entsprechende Ausnehmungen des Kupplungsgliedes 12 eingreifen. Für die Übertragung eines Anstelldruckes ist das Kupplungsglied 12 mit einem zentrischen Vorsprung 30 versehen, gegen den ein kalottenförmiges Kopfstück 31 der Drehwelle 13 anliegt (vgl. Fig. 3). Der Anstelldruck wird von einem Satz Tellerfedern 18 erzeugt, die zwischen einer am unteren Ende der Drehwelle 13 vorgesehenen Schulter 17 und einem Kugellager 19 verspannt sind. Das Kugellager 19 liegt gegen ein Druckstück 20 an, das mit einem Außengewinde 21 in einem Innengewinde 22 des Rohrstutzens 14 verschraubbar ist. Das Kugellager 19 verhindert eine Übertragung der Drehbewegung des Druckstücks 20 bei desses Verschraubung auf die Tellerfedern 18 und die Drehwelle 13. Im Kugellager 19 ist die Drehwelle 13 axial geführt, die durch einen am Rohrstutzen 14 befestigten Deckel 28 ragt und an ein Antriebsorgan angekoppelt ist.

Damit ein Durchtritt kleinster Stoffmengen zwischen der Gleitfläche 5 des Keramikkörpers 1 und der Stirnfläche 29 des Drehschriebers 8 infolge einer Grenzflächendiffusion verhindert wird, ist am Außenrand dieser Dichtungsflächen ein von einer Druckhülse 23 beaufschlagter Dichtungsring

24, vorzugsweise ein O-Ring, angeordnet. Die Druckhülse 23 ist mit einer Fase 25 versehen, welche den Dichtungsring 24 gegen den Außenrand der beiden Dichtungsflächen preßt. Die Druckhülse 23 ist von einer Spannhülse 26 beaufschlagt, die an ihrem oberen Rand mit einem Außengewinde versehen und ebenso wie das Druckstück 20 im Innengewinde 22 des Rohrstutzens 14 verschraubbar ist. Durch diese Ausbildung kann der Anpreßdruck von dem Drehschieber 8 und der Anpreßdruck von der Druckhülse 23 unabhängig voneinander eingestellt werden.

Wenngleich die doppelte Abdichtung des durch die keramischen Bauteile strömenden Mediums nach außen mittels der keramischen Dichtungsflächen (Gleitfläche 5 und Stirnfläche 29) und des zusätzlichen Dichtungsrings 24 in der Regel völlig ausreichend ist, kann es zur erhöhten Sicherung bei einer Anwendung für giftige Medien o. dgl. zweckmäßig sein, zwischen der Druckhülse 23 und dem Außenmantel des Drehschiebers 8 und/oder Kupplungsgliedes 12 und bedarfsweise auch dem Innenmantel des Rohrstutzens 14 und zwischen dem Außenmantel 4 des Keramikkörpers 1 und dem rohrförmigen Gehäuses 1 ein oder mehrere Dichtungsringe anzuordnen (in der Zeichnung nicht dargestellt).

Für einen gegenüber der Ausführung nach der Zeichnung vergrößteren Druckflußquerschnitt kann der Durchmesser der Querkanäle auch größer als der Druchmesser der Durchflußbohrung sein. Um in jedem Querkanal den vollen Durchflußquerschnitt der Durchflußbohrung zu erhalten, müßte deren Durchmesser um den Faktor $\sqrt{2}$ größer als der Durchmesser der Durchflußbohrung sein. Entsprechend dicker müßte dann auch der Mantel des Keramikkörpers 1 sein.

Bezugszeichenliste

| | |
|---|---|
| 1 | Keramikkörper |
| 2 | rohrförmiges Gehäuse |
| 3 | axiale Durchflußbohrung |
| 4 | Außenmantel |
| 5 | Gleitfläche |
| 6 | Zwischenwand |
| 7 | Querkanäle |
| 8 | Drehschieber |
| 9 | Verbindungskanäle |
| 10 | Zwischensteg |
| 11 | Schlitz |
| 12 | Kupplungsglied |
| 13 | Drehwelle |
| 14 | Rohrstutzen |
| 15 | Steg |
| 16 | Mitnehmernasen |
| 17 | Schulter |
| 18 | Tellerfedern |
| 19 | Kugellager |
| 20 | Druckstück |
| 21 | Außengewinde |
| 22 | Innengewinde |
| 23 | Druckhülse |
| 24 | Dichtungsring |
| 25 | Fase |
| 26 | Spannhülse |
| 27 | Außengewinde |
| 28 | Deckel |
| 29 | Stirnfläche |
| 30 | zentrischer Vorsprung |
| 31 | kalottenförmiges Kopfstück |

- 9 -

Patentansprüche

1. Keramisches Absperr- und Regelorgan, bestehend aus einem in einem Gehäuse (2) angeordneten zylinderförmigen Keramikkörper (1), dessen axiale Durchflußbohrung (3) eine Zwischenwand (6) aufweist und an dessen Außenmantel (4) eine plangeschiffene, geläppte und bedarfsweise polierte Gleitfläche (5) für einen von einer Anpreßfeder beaufschlagten Drehschieber (8) aus keramischem Werkstoff vorgesehen ist, dessen gegen die Gleitfläche (5) anliegende, plangeschiffene und geläppte Stirnfläche (29) wenigstens einen Verbindungskanal (9) aufweist, der über zwei im Keramikkörper (1) neben der Zwischenwand (6) angeordnete, von der Gleitfläche (5) bis zur Durchflußbohrung (3) führenden Querkanälen (7) angeordnet ist, dadurch gekennzeichnet, daß im Keramikkörper (1) auf jeder Seite der Zwischenwand (6) ein im Querschnitt halbkreisförmiger, mindestens dem Durchmesser der Durchflußbohrung (3) entsprechender Querkanal (7) angeordnet und der Drehschieber (8) mit zwei entsprechenden, im Querschnitt halbkreisförmigen Verbindungskanälen (9) und einem Zwischensteg (10) versehen ist.

2. Keramisches Absperr- und Regelorgan nach Anspruch 1, dadurch gekennzeichnet, daß am Außenrand der Gleitfläche (5) ein von einer Druckhülse (23) beaufschlagter Dichtungsring (24) angeordnet ist.

3. Keramisches Absperr- und Regelorgan nach Anspruch 2, dadurch gekennzeichnet, daß die Druckhülse (23) mit einer Fase (25) versehen ist, welche den Dichtungsring (24) gegen den Außenrand der Gleitfläche (5) preßt.

4. Keramisches Absperr- und Regelorgan nach Anspruch 2 oder 3, dadurch gekennzeichnet, daß die Druckhülse (23) von einer mit einem Außengewinde (27) im Gehäuse (2) verschraubbaren Spannhülse (26) beaufschlagt ist.

5. Keramisches Absperr- und Regelorgan nach einem der Ansprüche 1 bis 4, dadurch gekennzeichnet, daß der Drehschieber (8) mit einen über dem Zwischensteg (10) verlaufenden Schlitz (11) versehen ist, in den ein von einer Drehwelle (13) beaufschlagtes Kupplungsglied (12) eingreift.

6. Keramisches Absperr- und Regelorgan nach Anspruch 5, dadurch gekennzeichnet, daß das Kupplungsglied (12) mit einem in den Schlitz (11) des Drehschiebers (8) eingreifenden Steg (15) und die Drehwelle (13) mit Mitnehmernasen (16) versehen ist, welche in entsprechende Ausnehmungen des Kupplungsgliedes (12) eingreifen.

7. Keramisches Absperr- und Regelorgan nach Anspruch 5 oder 6, dadurch gekennzeichnet, daß die Drehwwelle (13) von Tellerfedern (18) beaufschlagt wird.

8. Keramisches Absperr- und Regelorgan nach Anspruch 7, dadurch gekennzeichnet, daß die Tellerfedern (18) unter Zwischenlage eines Kugellagers (19) zwischen einem mit einem Außengewinde (21) im Gehäuse (2) verschraubbaren Druckstück (20) für die Drehwelle (13) und einer Schulter (17) der Drehwelle (13) verspannbar sind.

9. Keramisches Absperr- und Regelorgan nach Anspruch 8, dadurch gekennzeichnet, daß das Kupplungsglied (12) mit einem zentrischen Vorsprung (30) versehen ist, gegen den ein kalottenförmiges Kopfstück (31) der Drehwelle (13) anliegt.

0204869

Fig. 1

Fig. 2

Fig. 3

Fig. 4

Fig. 5

Europäisches
Patentamt

EUROPÄISCHER RECHERCHENBERICHT

0204869
Nummer der Anmeldung

EP 85 20 0918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-C- 70 617 (GRÖNDAL) <br> * Anspruch 1, Figuren 1-3 * | 1 | F 16 K 3/08 <br> F 16 K 27/04 |
| A | DE-C-1 085 656 (SKOGLUND & OLSON) <br> * Figuren 1, 2 * | 1 | |
| A | DE-A-2 349 131 (WOLVERINE BRASS WORKS) <br> * Figuren 1, 3 * | 1 | |
| A | GB-A- 721 011 (GENERAL CERAMICS & STEATITE) <br> * Anspruch 1 * | 1 | |
| A | CH-A- 574 067 (AMERICAN STANDARD) <br> * Figur 3 * | 2,4 | RECHERCHIERTE SACHGEBIETE (Int. Cl.4) |
| A | US-A-3 570 810 (KAWOLICS) <br> * Figuren 2, 3 * | 5 | F 16 K 3/00 <br> F 16 K 27/00 |
| D,A | DE-U-7 726 941 (FRIEDRICH GROHE ARMATURENFABRIK) | | |
| D,A | US-A-3 662 986 (DOMULEWICZ) | | |
| D,A | FR-A- 502 046 (BENTON & STONE) | | |

Der vorliegende Recherchenbericht wurde für alle Patentansprüche erstellt

| Recherchenort <br> BERLIN | Abschlußdatum der Recherche <br> 22-02-1986 | Prüfer <br> SCHLABBACH M |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82